# EUROPEAN PATENT APPLICATION

(11) **EP 4 826 816 A1**
(43) Date of publication of application: **21.10.2026**
(21) Application number: 26172421.5
(22) Date of filing: 15.04.2026
(51) Int. Cl.: H01M 10/052, H01M 10/0562, H01M 10/0585

(54) **BATTERY AND SOLID ELECTROLYTE LAYER**

(30) Priority: 16.04.2025 JP 2025067324; 25.02.2026 JP 2026028787
(71) Applicant: Toyota Jidosha Kabushiki Kaisha, Toyota-shi, Aichi-ken 471-8571 (JP)
(72) Inventor: YAMAGUCHI, Yudai, Toyota-shi, Aichi-ken 471-8571 (JP); SHIMADA YAMAMOTO, Emi, Toyota-shi, Aichi-ken 471-8571 (JP)
(74) Representative: Winter, Brandl - Partnerschaft mbB

(57) **Abstract**

A battery (10) includes a positive electrode layer (1), a solid electrolyte layer (2), and a negative electrode layer (3). The positive electrode layer (1), the solid electrolyte layer (2), and the negative electrode layer (3) are laminated in a thickness direction (D). The solid electrolyte layer (2) contains a solid electrolyte (2a) and a support body (2c) made of a plurality of fibers (2b). In a case where, with the solid electrolyte layer (2) seen in cross-section along the thickness direction (D), a direction orthogonal to the thickness direction (D) is called a first direction and the thickness direction (D) is called a second direction, and the length of the fiber (2b) in the first direction is denoted by A and the length of the fiber (2b) in the second direction is denoted by B, an average aspect ratio represented by A/B is 1.5 to 4.3, both inclusive.

## Description

### BACKGROUND OF THE INVENTION

### 1. Field of the Invention

The present disclosure relates to a battery and a solid electrolyte layer.

### 2. Description of Related Art

In recent years, development of batteries has been vigorously conducted. For example, the automobile industry has been pursuing development of batteries used for battery electric vehicles (BEVs), plug-in hybrid electric vehicles (PHEVs), or hybrid electric vehicles (HEVs).

From the viewpoints of holding a solid electrolyte, preventing short-circuit, etc., using a support body, such as a non-woven fabric, for a solid electrolyte layer has been considered. For example, Japanese Unexamined Patent Application Publication No. 2024-018552 (JP 2024-018552 A) discloses a solid electrolyte sheet including a non-woven fabric and a solid electrolyte disposed inside the non-woven fabric, and an all-solid-state battery including this solid electrolyte sheet.

Japanese Unexamined Patent Application Publication No. 2023-22836 (JP 2023-22836 A) discloses a manufacturing method of a solid electrolyte sheet that uses an insulating porous substrate as a support body. This manufacturing method includes the steps of forming a slurry by dispersing solid electrolyte particles along with a binder in a solvent, filling holes of an insulating porous substrate made of fibrous substance with the slurry, and drying the slurry filling the holes of the insulating porous substrate, and is characterized in that the thickness of the solid electrolyte sheet is 5 µm to 50 µm, both inclusive, and that the thickness of the insulating porous substrate is 70% or more of the thickness of the solid electrolyte sheet.

### SUMMARY OF THE INVENTION

There is demand for reducing battery resistance from the viewpoint of improving the battery performance. In view of the above circumstances, the present disclosure provides a battery with reduced resistance.

A battery according to a first aspect of the present disclosure includes a positive electrode layer, a solid electrolyte layer, and a negative electrode layer. The positive electrode layer, the solid electrolyte layer, and the negative electrode layer are laminated in a thickness direction.

The solid electrolyte layer contains a solid electrolyte and a support body containing a plurality of fibers.

In a case where, with the solid electrolyte layer seen in cross-section along the thickness direction, a direction orthogonal to the thickness direction is called a first direction and the thickness direction is called a second direction, and the length of the fiber in the first direction is denoted by A and the length of the fiber in the second direction is denoted by B, an average aspect ratio represented by A/B is 1.5 or higher and 4.3 or lower.

In the battery according to the first aspect of the present disclosure, the average aspect ratio may be 2.2 or higher.

In the battery according to the first aspect of the present disclosure, the average aspect ratio may be 2.9 or higher.

In the battery according to the first aspect of the present disclosure, a filling factor of the solid electrolyte layer may be 85% or higher.

In the battery according to the first aspect of the present disclosure, the filling factor of the solid electrolyte layer may be 97% or lower.

In the battery according to the first aspect of the present disclosure, the filling factor of the solid electrolyte layer may be 87% or higher and 93% or lower.

A solid electrolyte layer according to a second aspect of the present disclosure includes a solid electrolyte and a support body containing a plurality of fibers.

In a case where, with the solid electrolyte layer seen in cross-section along the thickness direction, a direction orthogonal to the thickness direction is called a first direction and the thickness direction is called a second direction, and the length of the fiber in the first direction is denoted by A and the length of the fiber in the second direction is denoted by B, an average aspect ratio represented by A/B is 1.5 or higher and 4.3 or lower.

The present disclosure offers the advantage of being able to provide a battery with reduced resistance.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view illustrating a battery in the present disclosure;
FIG. 2 is a schematic sectional view illustrating a solid electrolyte layer (first aspect) in the present disclosure;
FIG. 3A is a view for describing an aspect ratio of fibers in a case where the fibers do not overlap in the present disclosure;
FIG. 3B is a view for describing the aspect ratio of the fibers in a case where the fibers overlap in the present disclosure;
FIG. 4A is a graph showing results of Examples and Comparative Example about a relative ratio of a resistance value when the resistance value of Example 2 is taken as 1.0;
FIG. 4B is a graph showing results of Examples and Comparative Example about a relative ratio of a resistance value when the resistance value of Example 5 is taken as 1.0; and
FIG. 5 is a schematic sectional view illustrating a solid electrolyte layer (second aspect) in the present disclosure.

### DETAILED DESCRIPTION OF EMBODIMENTS

In the following, a battery and a solid electrolyte layer in the present disclosure will be described in detail. Drawings to be shown in the following are schematically depicted, with the sizes and the shapes of parts exaggerated as necessary to facilitate understanding.

### A. Battery

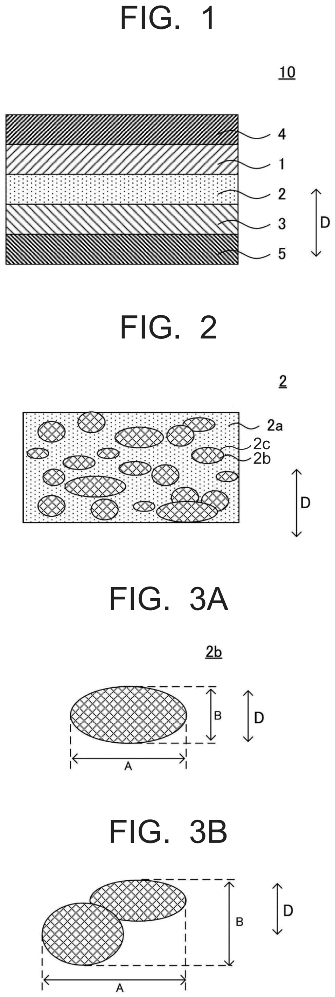

FIG. 1 is a schematic sectional view illustrating a battery in the present disclosure, and FIG. 2 is a schematic sectional view illustrating a solid electrolyte layer in the present disclosure. FIG. 3A is a view for describing an aspect ratio of fibers in a case where the fibers do not overlap in the present disclosure. FIG. 3B is a view for describing the aspect ratio of the fibers in a case where the fibers overlap in the present disclosure. A battery 10 shown in FIG. 1 has a positive electrode layer 1, a solid electrolyte layer 2, and a negative electrode layer 3 in a thickness direction D. Further, the battery 10 has a positive electrode current collector 4 that collects electrons of the positive electrode layer 1 and a negative electrode current collector 5 that collects electrons of the negative electrode layer 3. As shown in FIG. 2, FIG. 3A, and FIG. 3B, the solid electrolyte layer 2 contains a solid electrolyte 2a and a support body 2c made of a plurality of fibers 2b. When, with the solid electrolyte layer 2 seen in cross-section along the thickness direction D, a direction orthogonal to the thickness direction D (the left-right direction in the sheet of the drawing) is called a first direction and the thickness direction D is called a second direction, and the length of the fiber 2b in the first direction is denoted by A and the length of the fiber 2b in the second direction is denoted by B, an average aspect ratio represented by A/B is 1.5 to 4.3, both inclusive.

According to the present disclosure, since the average aspect ratio of the fibers composing the support body in the solid electrolyte layer is 1.5 to 4.3, both inclusive, a battery with reduced resistance can be obtained.

From the viewpoints of holding a solid electrolyte, preventing short-circuit, etc., using a support body, such as a non-woven fabric, for a solid electrolyte layer has been considered. In such a solid electrolyte layer, carrier ions, such as Li ions, move through the solid electrolyte part that has high ion conductivity. That is, an ion conduction path bends so as to avoid the support body part (the part of the fibers composing the support body). In this respect, it is inferred that when the aspect ratio of the fiber cross-section is high, i.e., when the length of the fibers in the direction orthogonal to the thickness direction is large, the ion conduction path bends more sharply in the thickness direction, adding to the battery resistance. When the aspect ratio of the fiber cross-section is low, the battery resistance tends to be high due to the low filling factor of the solid electrolyte layer.

On the other hand, in the present disclosure, the average aspect ratio (A/B) of the fibers composing the support body is 4.3 or lower, and the cross-sectional shapes of the fibers are almost perfectly circular shapes. Thus, it is inferred that the bend of the ion conduction path is gentle, which is why the battery resistance can be reduced. Moreover, in the present disclosure, since the average aspect ratio (A/B) of the fibers composing the support body is 1.5 or higher, the filling factor of the solid electrolyte layer can be increased, which is why the battery resistance can be reduced.

### 1. Solid Electrolyte Layer

The solid electrolyte layer in the present disclosure contains the solid electrolyte and the support body made of the fibers.

### 1-1. Support Body

As described above, when the length of the fiber in the first direction is denoted by A and the length of the fiber in the second direction is denoted by B, the average aspect ratio of the fibers represented by A/B is 1.5 to 4.3, both inclusive. The average aspect ratio is 4.3 or lower, and may be 4.0 or lower, 3.9 or lower, 3.5 or lower, 3.3 or lower, 3.0 or lower, 2.7 or lower, or 2.5 or lower. On the other hand, the average aspect ratio is 1.5 or higher, and may be 1.7 or higher, 1.8 or higher, 2.0 or higher, 2.2 or higher, 2.5 or higher, or 2.9 or higher.

The inventors of the present application found that when a support body, such as a non-woven fabric, was used for a solid electrolyte layer, while the strength of the solid electrolyte layer could be secured, cracking tended to occur inside the solid electrolyte layer. If cracking occurs, the cycle characteristic degrades as precipitated Li moves easily through a cavity resulting from the cracking. In addition, the resistance is likely to rise. It is inferred that such cracking is caused by the difference in elastic property between the solid electrolyte and the support body included in the solid electrolyte layer. Specifically, it is inferred that cracking occurs due to springback as a material with a lower Young's modulus is deformed by pressing. This deformation can occur also when an electrode expands while the battery is used. In this regard, the inventors of the present application found that when the average aspect ratio of the fibers represented by A/B was 2.9 or higher, the fibers were allowed to deform to a plastic range inside the solid electrolyte layer, whereby cracking could be inhibited.

The lengths A and B of the fibers are not particularly limited as long as the aforementioned aspect ratio is met. The length A is, for example, 3 µm to 10 µm, both inclusive, and the length B is, for example, 1 µm to 8 µm, both inclusive.

The lengths A, B and the aspect ratio of the fibers can be adjusted by changing the material of the fibers and the diameter of the fibers, as well as manufacturing conditions, such as a pressing pressure to be applied to the solid electrolyte layer. For example, as will be described in Examples to be described later, increasing the pressing pressure can adjust the aspect ratio toward a higher ratio. Further, reducing the Young's modulus of the fibers can adjust the aspect ratio toward a higher ratio.

As shown in FIG. 2 and FIG. 3A, the lengths A, B and the average aspect ratio of the fibers 2b can be obtained from a cross-sectional image of the solid electrolyte layer 2 along the thickness direction D. The number of fibers used for measurement of the average aspect ratio is, for example, 5 or more, and may be 10 or more, 30 or more, or 50 or more. When fibers overlap in the cross-sectional image as shown in FIG. 3B, the lengths A, B are measured with these fibers regarded as one fiber.

The material of the fibers in the present disclosure can be, for example, resin or glass. The resin can be, for example, polyester-based resin, polyolefin-based resin, or polyamide-based resin. The polyester-based resin can be, for example, polyethylene terephthalate (PET). The polyolefin-based resin can be, for example, polyethylene (PE) or polypropylene (PP). The polyamide-based resin can be, for example, nylon or aramid.

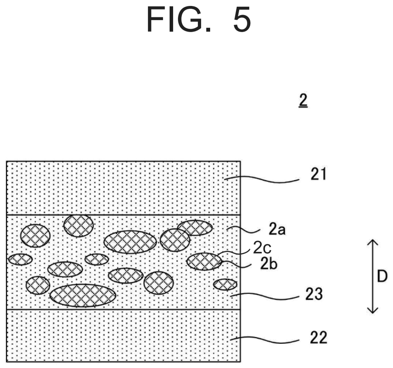

Here, the support body in the present disclosure may be a non-woven fabric or may be a woven fabric. For example, the solid electrolyte layer in the present disclosure may be a solid electrolyte layer containing a non-woven fabric made of a plurality of fibers and a solid electrolyte filling the inside of the non-woven fabric. The solid electrolyte may be disposed so as to cover surfaces (an upper surface and a lower surface) of the non-woven fabric. That is, as shown in FIG. 2, the solid electrolyte layer 2 may have a single-layer structure containing a non-woven fabric and a solid electrolyte filling the inside of the non-woven fabric (first aspect). On the other hand, as shown in FIG. 5, the solid electrolyte layer 2 may have a first layer 21 and a second layer 22 that do not include a non-woven fabric, and a third layer 23 that includes a non-woven fabric and is disposed between the first layer 21 and the second layer 22 (second aspect). In the present disclosure, the first aspect is preferred. This is because a rise in resistance due to interface delamination between the first layer 21 and the third layer 23 and between the third layer 23 and the second layer 22 that can occur in the second aspect can be inhibited.

The volume percentage of the fibers in the solid electrolyte layer is, for example, 10% to 30%, both inclusive, and may be 15% to 25%, both inclusive. If the volume percentage of the fibers is within the aforementioned range, the effects of inserting the support body (holding the solid electrolyte and preventing short-circuit) are more likely to be achieved, as well as a decrease in ion conductivity can be inhibited. In particular, when the solid electrolyte layer has the first aspect, it is preferable that the volume percentage of the fibers meet the aforementioned range.

### 1-2. Solid Electrolyte

The solid electrolyte can be, for example, an inorganic solid electrolyte, such as a sulfide solid electrolyte, an oxide solid electrolyte, a nitride solid electrolyte, a halide solid electrolyte, or a solid electrolyte. Among these, a sulfide solid electrolyte is preferred, as it has high ion conductance.

A sulfide solid electrolyte is a solid electrolyte containing a sulfur element (S element) as a main component of an anion element. The sulfide solid electrolyte can be, for example, a solid electrolyte containing an Li element, an X element (X is at least one type among P, As, Sb, Si, Ge, Sn, B, Al, Ga, and In), and an S element. The sulfide solid electrolyte may contain, as the X element, one type of element or two or more types of elements. It is preferable that the sulfide solid electrolyte contain a P element as the X element. The sulfide solid electrolyte may further contain at least one of an O element and a halogen element. The halogen element can be, for example, an F element, a Cl element, a Br element, or an I element.

The sulfide solid electrolyte may be glass (amorphous) or may be glass ceramic, or may be crystalline. The sulfide solid electrolyte may have a crystal phase. The crystal phase can be, for example, a Thio-LISICON crystal phase, an argyrodite crystal phase, or an LGPS crystal phase.

The sulfide solid electrolyte can be, for example, Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₃-LiI, Li₂S-B₂S₃, Li₂S-P₂S₅-ZₘSₙ (where m and n are positive numbers, and Z is one of Ge, Zn, and Ga), Li₂S-GeS₂, Li₂S-SiS₂-Li₃PO₄, or Li₂S-SiS₂-LiₓMO_{y} (where x and y are positive numbers, and M is one of P, Si, Ge, B, Al, Ga, and In).

The solid electrolyte can also be, for example, an organic solid electrolyte, such as a polymer electrolyte or a gel electrolyte.

### 1-3. Solid Electrolyte Layer

While the thickness of the solid electrolyte layer is not particularly limited, it is, for example, 30 µm to 1000 µm, both inclusive. The solid electrolyte layer may contain a binder as necessary. For the binder, the same content that is to be described in "2. Positive Electrode Layer" applies.

The filling factor of the solid electrolyte layer is preferably 85% or higher and more preferably 90% or higher. When the filling factor of the solid electrolyte layer is not lower than this value, the battery resistance can be further reduced. The filling factor of the solid electrolyte layer can be calculated from the weight of a sample of the solid electrolyte layer, the thickness after pressing, and the density of the sample.

The amount of cracking of the solid electrolyte layer is preferably 0.1% or lower and more preferably 0.05% or lower. When the amount of cracking is not higher than this value, movement of precipitated Li can be inhibited and the cycle characteristic improves. The amount of cracking of the solid electrolyte layer can be calculated as a value obtained by observing a cross-sectional SEM image of the solid electrolyte layer and dividing the area of a region where cracking has occurred by the area of the solid electrolyte layer.

The method of manufacturing the solid electrolyte layer is not particularly limited. For example, when the support body is a non-woven fabric, the method can be one that, by employing an application technique using a slurry containing a solid electrolyte, fills the inside of the non-woven fabric with the slurry and then dries and presses the non-woven fabric.

### 2. Positive Electrode Layer

The positive electrode layer contains at least a positive electrode active material.

The positive electrode active material can be, for example, an oxide active material. The oxide active material can be, for example, a bedded salt-type active material such as LiNi_{1/3}Co_{1/3}Mn_{1/3}O₂ or LiNi_{0.8}Co_{0.15}Al_{0.05}O₂, a spinel-type active material such as LiMn₂O₄, or an olivine-type active material such as LiFePO₄. Further, sulfur (S) may be used as the positive electrode active material. The form of the positive electrode active material is, for example, a particulate form.

A coat layer containing an Li ion conductive oxide may be formed on a surface of the positive electrode active material. The Li ion conductive oxide can be, for example, LiNbO₃, Li₄Ti₅O₁₂, Li₃PO₄, or LBPO (a solid electrolyte having an Li element, a B element, and a PO₄ structure).

The positive electrode layer may contain at least one of a conductive material, a binder, and a solid electrolyte as necessary. For the solid electrolyte, the same content that has been described in "1. Solid Electrolyte Layer" applies.

The conductive material can be, for example, a carbon material. The carbon material can be, for example, a particulate carbon material such as acetylene black (AB) or ketjen black (KB), or a fibrous carbon material such as carbon fiber, carbon nanotube (CNT), or carbon nanofiber (CNF).

The binder can be, for example, a rubber-based binder such as butadiene rubber (BR), acrylate-butadiene rubber (ABR), or styrene-butadiene rubber (SBR), or a fluorine-containing binder such as polyvinylidene fluoride (PVDF) or polytetrafluoroethylene (PTFE).

While the thickness of the positive electrode layer is not particularly limited, it is, for example, 30 µm to 1000 µm, both inclusive.

### 3. Negative Electrode Layer

The negative electrode layer contains at least a negative electrode active material. The negative electrode active material can be, for example, a carbon-based active material, an Li-based active material, an Si-based active material, or an oxide-based active material.

The carbon-based active material can be, for example, graphite, soft carbon, or hard carbon. The graphite may be natural graphite or artificial graphite. The Li-based active material can be, for example, Li or Li alloy. The Li alloy can be, for example, Li-Si alloy. The Si-based active material can be, for example, Si, an SiC composite active material, Si alloy, or Si oxide. The SiC composite active material can be, for example, an active material in which Si or Si alloy is supported by a carbon carrier. The oxide-based active material can be, for example, lithium titanate, such as Li₄Ti₅O₁₂.

The negative electrode layer may contain at least one of a conductive material, a binder, and a solid electrolyte as necessary. For these, the same content that has been described in "2. Positive Electrode Layer" applies.

While the thickness of the negative electrode layer is not particularly limited, it is, for example, 30 µm to 1000 µm, both inclusive.

### 4. Battery

It is preferable that the battery have a positive electrode current collector that collects a current of the positive electrode layer and a negative electrode current collector that collects a current of the negative electrode layer. The material of the positive electrode current collector can be, for example, SUS, aluminum, nickel, iron, titanium, or carbon. On the other hand, the material of the negative electrode current collector can be, for example, SUS, copper, nickel, or carbon. The battery in the present disclosure may have an outer package that houses the above-described members. The outer package can be, for example, a case-type outer package or a laminate-type outer package.

The battery in the present disclosure may further have a restraining jig that applies a restraining pressure to the positive electrode layer, the solid electrolyte layer, and the negative electrode layer along the thickness direction. The restraining pressure is, for example, 0.1 MPa to 100 MPa, both inclusive.

The battery in the present disclosure is typically a lithium-ion battery. The battery in the present disclosure includes a solid electrolyte layer and is therefore typically a solid-state battery. The battery in the present disclosure may be a semi-solid-state battery or may be an all-solid-state battery. A battery that contains only the aforementioned inorganic solid electrolyte as the solid electrolyte is called an all-solid-state battery.

While the battery in the present disclosure may be a primary battery or may be a secondary battery, of these, a secondary battery is preferred. This is because a secondary battery is repeatedly chargeable and dischargeable, which makes it useful as an on-board battery, for example. The purpose of the battery can be, for example, a power source of a vehicle such as a hybrid electric vehicle (HEV), a plug-in hybrid electric vehicle (PHEV), a battery electric vehicle (BEV), a gasoline vehicle, or a diesel vehicle. In particular, it is preferable that the battery be used as a driving power source of a hybrid electric vehicle (HEV), a plug-in hybrid electric vehicle (PHEV), or a battery electric vehicle (BEV). In addition, the battery may be used as a power source of a mobile body other than a vehicle (e.g., a train, a ship, or an airplane), or may be used as a power source of an electrical product, such as an information processing device.

### B. Solid Electrolyte Layer

The present disclosure can also provide a solid electrolyte layer containing a solid electrolyte and a support body made of a plurality of fibers, wherein when, with the solid electrolyte layer seen in cross-section along a thickness direction, a direction orthogonal to the thickness direction is called a first direction and the thickness direction is called a second direction, and the length of the fiber in the first direction is denoted by A and the length of the fiber in the second direction is denoted by B, an average aspect ratio represented by A/B is 1.5 to 4.3, both inclusive.

For the solid electrolyte, the fibers, the length and the aspect ratio of the fibers, and the support body, the same content that has been described in "A. Battery" applies. The thickness direction of the solid electrolyte layer is a direction in which the positive electrode layer and the negative electrode layer are laminated when the solid electrolyte layer is used for the above-described battery.

The solid electrolyte layer in the present disclosure may be, for example, formed on a film, such as a PET film. This is because, as will be described in Examples to be described later, such a transfer member having a solid electrolyte layer and a film can be effectively used to manufacture a battery.

For the manufacturing method of the solid electrolyte layer, the same content that has been described in "A. Battery" applies.

The present disclosure is not limited to the above-described embodiment. The above-described embodiment is presented as an example, and any embodiments that have substantially the same configuration and produce the same operational effects as the technical idea described in the claims in the present disclosure are included in the technical scope in the present disclosure.

### Example 1

### Production of Solid Electrolyte Layer

First, a PET non-woven fabric (basis weight: 5 g/m²) was produced by a wet method.

Next, an argyrodite sulfide solid electrolyte (D₅₀: 1 µm) and an SBR-based binder were added to tetralin, and the obtained mixture was subjected to a one-minute ultrasonic dispersion process using an ultrasonic dispersion device. Thus, a slurry was prepared. The amount of binder was an amount corresponding to 3 weight% relative to the solid electrolyte. The solid content in the slurry was 40 weight%.

Next, the PET non-woven fabric was placed on a release film (25 µm-thick Si-coated PET film), and the slurry was evenly applied thereto. The application was performed by blade coating using a commercially available applicator, and was performed so as to achieve a basis weight of 3.0 mg/cm².

After the application, a drying process was performed at 100°C for 60 minutes. Thus, a first transfer member was produced in which a solid electrolyte layer containing a support body (PET non-woven fabric) and a sulfide solid electrolyte was formed on a release film.

On the other hand, the aforementioned slurry was evenly applied to a release film, and thus a second transfer member was produced in which a solid electrolyte layer that did not include a support body was formed on a release film.

### Production of Positive Electrode-Side Member

An LBPO film was formed on a surface of an oxide active material (LiNi_{0.8}Co_{0.15}Al_{0.05}O₂) with a D₅₀ of 3 µm by a sol-gel method to produce a composite active material. This composite active material as a positive electrode active material and the aforementioned argyrodite sulfide solid electrolyte were weighed out to a volume ratio of 7:3. Further, a conductive material (VGCF) was weighed out in an amount equivalent to 3 weight% relative to the positive electrode active material, and an SBR-based binder was weighed out in an amount equivalent to 1 weight% relative to the positive electrode active material. These materials were added to tetralin, and the obtained mixture was subjected to a one-minute ultrasonic dispersion process using an ultrasonic dispersion device. Thus, a positive electrode slurry was prepared. The solid content in the positive electrode slurry was 65 weight%.

The obtained positive electrode slurry was evenly applied to a positive electrode current collector (15 µm-thick aluminum foil) by blade coating using a commercially available applicator. The basis weight was 12 mg/cm². After the application, a drying process was performed at 100°C for 60 minutes. Thus, a positive electrode having a positive electrode current collector and a positive electrode layer was produced.

Then, the positive electrode and the second transfer member were layered such that the positive electrode layer and the solid electrolyte layer faced each other, and the obtained laminate was pressed under 5 ton/cm. After the pressing, the release film was removed to obtain a positive electrode-side member.

### Production of Negative Electrode-Side Member

A negative electrode active material (Li₄Ti₅O₁₂) with a D₅₀ of 1 µm and a sulfide solid electrolyte (Li₂S-P₂S₅-based glass ceramic) were weighed out to a volume ratio of 6:4. Further, a conductive material (VGCF) was weighed out in an amount equivalent to 1 weight% relative to the negative electrode active material, and an SBR-based binder was weighed out in an amount equivalent to 2 weight% relative to the negative electrode active material. These materials were added to tetralin, and the obtained mixture was subjected to a one-minute ultrasonic dispersion process using an ultrasonic dispersion device. Thus, a negative electrode slurry was prepared. The solid content in the negative electrode slurry was 60 weight%.

The obtained negative electrode slurry was evenly applied to a negative electrode current collector (20 µm-thick copper foil) by blade coating using a commercially available applicator. The basis weight was 19 mg/cm². After the application, a drying process was performed at 100°C for 60 minutes. Thus, a negative electrode having a negative electrode current collector and a negative electrode layer was produced.

Then, by the same method as with the positive electrode-side member, a negative electrode-side member in which a solid electrolyte layer was disposed on a negative electrode layer was obtained.

### Production of Battery for Evaluation

The negative electrode-side member and the first transfer member were layered such that the solid electrolyte layers thereof faced each other, and the obtained laminate was pressed under 2 ton/cm (first pressing). The release film was removed from the pressed laminate, and the laminate and the positive electrode-side member were layered such that the solid electrolyte layers thereof faced each other, and the obtained laminate was pressed under 3 ton/cm (second pressing). The obtained electrode laminate was sealed by an outer package (aluminum laminate film) provided with a positive electrode terminal and a negative electrode terminal. Thus, a battery for evaluation (all-solid-state battery) was produced.

### Example 2

A battery for evaluation was produced in the same manner as in Example 1, except that the pressing pressure in the second pressing was changed to 4 ton/cm.

### Example 3

A PET non-woven fabric was produced with the pressing pressure in a wet method set to a higher pressure. That is, a non-woven fabric made of PET fibers with a higher aspect ratio than in Example 1 was produced. The pressing pressure in the second pressing was changed to 4 ton/cm. A battery for evaluation was produced in otherwise the same manner as in Example 1.

### Example 4

A PET non-woven fabric (basis weight: 5 g/m²) made of fibers that were softer and had a lower Young's modulus than those in Example 1 was produced by a spunbonding method. The pressing pressure in the second pressing was changed to 4 ton/cm. A battery for evaluation was produced in otherwise the same manner as in Example 1.

### Comparative Example 1

The pressing pressure in the second pressing was changed to 2 ton/cm. A battery for evaluation was produced in otherwise the same manner as in Example 1.

### Evaluation

### Aspect Ratio of Support Body

A cross-section of the produced battery was exposed, and a cross-sectional SEM image of the solid electrolyte layer and the support body (PET fibers) was acquired. From the obtained image, the lengths A and B of the fibers were measured and the aspect ratio (A/B) was calculated. The results are shown in Table 1. The aspect ratio was calculated as an average value obtained by measuring 50 fibers.

### Filling Factor of Solid Electrolyte Layer

The filling factor was calculated from the weight of a sample of the solid electrolyte layer, the thickness after pressing, and the density of the sample. The results are shown in Table 1.

### Battery Resistance

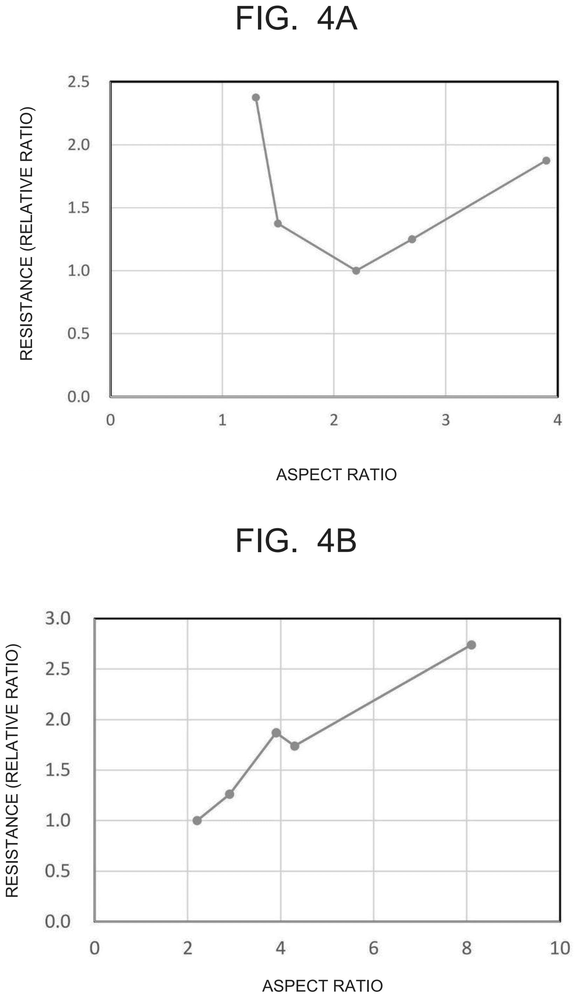

Two cycles of constant-current, constant-voltage charge and discharge were performed at a 1/3 C rate in a voltage range of 1.6 V to 4.4 V. Then, the state-of-charge (SOC) was adjusted to 20% at a 1/3 C rate. Then, an impedance measurement was performed with the voltage applied set to 10 mV and the range of frequency set to 0.1 to 106 Hz. In the obtained Cole-Cole plot, the value of an intersection with the real axis was acquired as a resistance value (Ω). A relative ratio of the resistance value when the resistance value of Example 2 was taken as 1.0 was calculated. The results are shown in Table 1 and FIG. 4A. That is, FIG. 4A is a graph showing results of Examples and Comparative Example about the relative ratio of the resistance value when the resistance value of Example 2 is taken as 1.0.

**Table 1**

| | Comparative Example 1 | Example 1 | Example 2 | Example 3 | Example 4 |
|---|---|---|---|---|---|
| Aspect ratio (A/B) | 1.3 | 1.5 | 2.2 | 2.7 | 3.9 |
| Resistance (Relative ratio) | 2.4 | 1.4 | 1.0 | 1.3 | 1.9 |
| Filling factor (%) | 65 | 87 | 92 | 93 | 89 |

As shown in Table 1 and FIG. 4A, it was recognized that the batteries in Example 1 to Example 4 had lower resistance than the battery in Comparative Example 1. From the results of Example 2 and Example 3 that were similar in the value of the filling factor, it was recognized that the aspect ratio influenced the resistance value.

Here, the resistance value in Comparative Example 1 was higher than the resistance values in Examples 1 to 4. In Comparative Example 1, the battery was produced with the pressing pressure reduced to reduce the aspect ratio, which led to an extremely low filling factor of the solid electrolyte layer as shown in Table 1. It is inferred that consequently the resistance reducing effect of the aspect ratio failed to compensate for an increase in resistance due to the extremely low filling factor, ending up with an increased resistance.

### Example 5

### Production of Solid Electrolyte Layer

First, a PET non-woven fabric (basis weight: 3 g/m²) was produced by a wet method.

As a sulfide solid electrolyte, an Li₂S-P₂S₅-based glass ceramic solid electrolyte with an average particle diameter (D₅₀) of 1 µm was prepared. A styrene-butadiene-rubber (SBR)-based binder was weighed out in an amount equivalent to 3 weight% relative to the sulfide solid electrolyte, and the sulfide solid electrolyte and the SBR-based binder were mixed into tetralin such that the solid content accounted for 35 weight%. Then, the obtained mixture was subjected to a one-minute ultrasonic dispersion process using an ultrasonic dispersion device to obtain a slurry for a solid electrolyte layer. Next, the PET non-woven fabric was placed on a 25 µm-thick release film (Si-coated PET film), and the obtained slurry for a solid electrolyte layer was evenly applied to the PET non-woven fabric by blade coating using a commercially available applicator so as to achieve a basis weight of 3.0 mg/cm². Thereafter, the coating film was subjected to a drying process at 100°C for 60 minutes. Thus, a transfer member was produced in which a solid electrolyte layer containing a support body (PET non-woven fabric) and a sulfide solid electrolyte was formed on a release film.

### Production of Positive Electrode

As a positive electrode active material, an LiNi_{0.8}Co_{0.15}Al_{0.05}O₂ powder with an average particle diameter (D₅₀) of 3 µm was prepared. A film of LiNbO₃ was formed on a surface of the positive electrode active material using a sol-gel method to produce a composite active material. As a solid electrolyte, the same sulfide solid electrolyte that was used for producing the solid electrolyte layer was prepared. The positive electrode active material and the sulfide solid electrolyte were weighed out to a mixing ratio between the positive electrode active material and the sulfide solid electrolyte of: positive electrode active material/sulfide solid electrolyte = 7/3 (volume ratio). Next, a conductive material (VGCF) was weighed out in an amount equivalent to 3 weight% relative to the amount of positive electrode active material, and further a styrene-butadiene-rubber (SBR)-based binder was weighed out in an amount equivalent to 1 weight% relative to the amount of positive electrode active material. These materials were mixed into tetralin such that the solid content accounted for 65 weight%, and the obtained mixture was subjected to a one-minute ultrasonic dispersion process using an ultrasonic dispersion device to obtain a composite for forming a positive electrode active material layer (positive electrode slurry). Next, the obtained positive electrode slurry was evenly applied to a positive electrode current collector (15 µm-thick aluminum foil) by blade coating using a commercially available applicator. The basis weight was 12 mg/cm². After the application, a drying process was performed at 100°C for 60 minutes. Thus, a positive electrode having a positive electrode current collector and a positive electrode layer was produced.

### Production of Negative Electrode

As a negative electrode active material, an Li₄Ti₅O₁₂ powder with an average particle diameter (D₅₀) of 1 µm was prepared. As a solid electrolyte, the same sulfide solid electrolyte that was used for producing the solid electrolyte layer was prepared. The negative electrode active material and the sulfide solid electrolyte were weighed out to a mixing ratio between the negative electrode active material and the sulfide solid electrolyte of: negative electrode active material/sulfide solid electrolyte = 6/4 (volume ratio). Next, a conductive material (VGCF) was weighed out in an amount equivalent to 1 weight% relative to the negative electrode active material. Further, a styrene-butadiene-rubber (SBR)-based binder was weighed out in an amount equivalent to 2 weight% relative to the negative electrode active material. These materials were mixed into tetralin such that the solid content accounted for 60 weight%, and the obtained mixture was subjected to a one-minute ultrasonic dispersion process using an ultrasonic dispersion device to obtain a negative electrode slurry.

The obtained negative electrode slurry was evenly applied to a negative electrode current collector (20 µm-thick surface-roughened copper foil) by blade coating using a commercially available applicator so as to achieve a basis weight of 19 mg/cm². After the application, a drying process was performed at 100°C for 60 minutes. Thus, a negative electrode having a negative electrode current collector and a negative electrode layer was produced.

### Production of Battery for Evaluation

The negative electrode and the transfer member of the same shape as the negative electrode were layered such that the negative electrode layer of the negative electrode and the solid electrolyte layer in the transfer member faced each other, and the obtained laminate was pressed under a pressing pressure of 1 ton/cm (negative electrode lamination pressing). Next, the release film of the transfer member was removed. Next, the obtained laminate and the positive electrode were layered such that the solid electrolyte layer of the obtained laminate and the positive electrode layer of the positive electrode faced each other, and the laminate thus obtained was pressed under a pressing pressure of 4 ton/cm (positive electrode lamination pressing). The obtained electrode laminate was sealed by an outer package (aluminum laminate film) provided with a positive electrode terminal and a negative electrode terminal. Thus, a battery for evaluation (all-solid-state battery) was produced.

### Example 6

A PET non-woven fabric (basis weight: 3 g/m²) made of PET fibers with a lower Young's modulus than in Example 5 was produced by a melt blowing method. A battery for evaluation was produced in the same manner as in Example 5, except that the obtained PET non-woven fabric was used.

### Example 7

A battery for evaluation was produced in the same manner as in Example 5, except that the pressing condition for the positive electrode lamination pressing was adjusted to 5 ton/cm.

### Example 8

A PET non-woven fabric made of PET fibers with an even lower Young's modulus was produced by a melt blowing method by lowering the draw ratio in a fiber drawing step compared with that in Example 6. A battery for evaluation was produced in the same manner as in Example 5, except that this PET non-woven fabric was used and that the pressing condition for the positive electrode lamination pressing was adjusted to 5 ton/cm.

### Comparative Example 2

The non-woven fabric used in Example 5 was prepared, and was further pressed under 5 ton/cm. A battery for evaluation was produced in the same manner as in Example 5, except that the obtained non-woven fabric was used and that the pressing condition for the positive electrode lamination pressing was adjusted to 5 ton/cm.

### Evaluation

As with Comparative Example 1 and Examples 1 to 4, the aspect ratio of the support body and the filling factor of the solid electrolyte layer were measured. The results are shown in Table 2. The battery resistance was measured in the same manner as with Comparative Example 1 and Examples 1 to 4, and the relative ratio of the resistance value when the resistance value of Example 5 was taken as 1.0 was calculated. The results are shown in Table 2 and FIG. 4B. That is, FIG. 4B is a graph showing results of Examples and Comparative Example about the relative ratio of the resistance value when the resistance value of Example 5 is taken as 1.0.

### Amount of Cracking

A cross-section of the solid electrolyte layer of the battery after a charge-discharge test was observed under an SEM (2000x magnification). A value obtained by dividing the area of a region where cracking had occurred by the area of the solid electrolyte layer was calculated as an amount of cracking (%). The same operation was performed for 10 fields of view and an average value was calculated. The results are shown in Table 2.

**Table 2**

| | Example 5 | Example 6 | Example 7 | Example 8 | Comparative Example 2 |
|---|---|---|---|---|---|
| Aspect ratio (A/B) | 2.2 | 2.9 | 3.9 | 4.3 | 8.1 |
| Resistance (Relative ratio) | 1.0 | 1.3 | 1.9 | 1.7 | 2.7 |
| Amount of cracking (%) | 0.2 | 0.05 | 0.03 | 0 | 0 |
| Filling factor (%) | 92 | 93 | 97 | 96 | 96 |

As shown in Table 2 and FIG. 4B, it was recognized that the batteries in Example 5 to Example 8 had lower resistance than the battery in Comparative Example 2. Further, it was recognized that the amounts of cracking in Example 6, Example 7, and Example 8 in which the aspect ratios were 2.9 or higher were smaller than the amount of cracking in Example 5. This is inferred to be because when the aspect ratio of the fibers was 2.9 or higher, the fibers were allowed to deform to a plastic range, whereby springback was inhibited.

## Claims

1. A battery (10) comprising:
a positive electrode layer (1);
a solid electrolyte layer (2); and
a negative electrode layer (3), wherein:
the positive electrode layer (1), the solid electrolyte layer (2), and the negative electrode layer (3) are laminated in a thickness direction (D);
the solid electrolyte layer (2) includes a solid electrolyte (2a) and a support body (2c) containing a plurality of fibers (2b); and
in a case where, with the solid electrolyte layer (2) seen in cross-section along the thickness direction (D), a direction orthogonal to the thickness direction (D) is called a first direction and the thickness direction (D) is called a second direction, and a length of the fiber (2b) in the first direction is denoted by A and a length of the fiber (2b) in the second direction is denoted by B, an average aspect ratio represented by A/B is 1.5 or higher and 4.3 or lower.

2. The battery (10) according to claim 1, wherein the average aspect ratio is 2.2 or higher.

3. The battery (10) according to claim 1, wherein the average aspect ratio is 2.9 or higher.

4. The battery (10) according to any one of claim 1 to claim 3, wherein a filling factor of the solid electrolyte layer (2) is 85% or higher.

5. The battery (10) according to claim 4, wherein the filling factor of the solid electrolyte layer (2) is 97% or lower.

6. The battery (10) according to claim 5, wherein the filling factor of the solid electrolyte layer (2) is 87% or higher and 93% or lower.

7. A solid electrolyte layer (2) comprising:
a solid electrolyte (2a); and
a support body (2c) containing a plurality of fibers (2b), wherein
in a case where, with the solid electrolyte layer (2) seen in cross-section along a thickness direction (D), a direction orthogonal to the thickness direction (D) is called a first direction and the thickness direction (D) is called a second direction, and a length of the fiber (2b) in the first direction is denoted by A and a length of the fiber (2b) in the second direction is denoted by B, an average aspect ratio represented by A/B is 1.5 or higher and 4.3 or lower.
